# EUROPEAN PATENT APPLICATION

(11) **EP 4 848 605 A1**
(43) Date of publication of application: **02.12.2026**
(21) Application number: 25767238.6
(22) Date of filing: 26.02.2025
(51) Int. Cl.: H04B 7/04

(54) **SIGNAL TRANSMISSION METHOD AND COMMUNICATION APPARATUS**

(30) Priority: 04.03.2024 CN 202410246897
(71) Applicant: Huawei Technologies Co., Ltd., Shenzhen, Guangdong 518129 (CN)
(72) Inventor: LIU, Yong, Shenzhen, Guangdong 518129 (CN); BI, Xiaoyan, Shenzhen, Guangdong 518129 (CN)
(74) Representative: Körber, Martin Hans
(86) International application number: PCT/CN2025/079150
(87) International publication number: WO 2025/185498

(57) **Abstract**

This application provides a signal transmission method and a communication apparatus. The method includes: A reconfigurable intelligent surface RIS apparatus receives a signal from at least one first communication apparatus; and sends the signal to at least two second communication apparatuses via a plurality of beams, where a beam vector for the plurality of beams is determined based on a beam vector for a single beam corresponding to each of the at least two second communication apparatuses. According to the method or the apparatus in this application, a plurality of second communication apparatuses can be simultaneously served via the RIS apparatus, thereby increasing a system capacity.

## Description

This application claims priority to Chinese Patent Application No. 202410246897.X, filed with the China National Intellectual Property Administration on March 4, 2024, and entitled "SIGNAL TRANSMISSION METHOD AND COMMUNICATION APPARATUS", which is incorporated herein by reference in its entirety.

### TECHNICAL FIELD

This application relates to the communication field, and more specifically, to a signal transmission method and a communication apparatus.

### BACKGROUND

The multiple-input multiple-output (multiple-input multiple-output, MIMO) technology allows signals to obtain array gains, multiplexing and diversity gains, and interference cancellation gains in space by using resources in a spatial dimension without increasing system bandwidth, thereby exponentially increasing capacities and spectral efficiency of communication systems. However, with the continuous increase in communication requirements such as high rates, high reliability, and low latency, modern communication systems persistently face challenges of larger capacities, wider coverage, and lower latency. To cope with the foregoing challenges, a reconfigurable intelligent surface (reconfigurable intelligent surface, RIS) has been widely studied as the promising technology. How to simultaneously serve a plurality of users via the RIS is a problem worth considering.

### SUMMARY

This application provides a signal transmission method and a communication apparatus, to simultaneously serve a plurality of users based on an RIS.

According to a first aspect, a signal transmission method is provided. The method may be performed by a communication apparatus. The communication apparatus may be an RIS (which may be referred to as an RIS apparatus), or may be a chip or a circuit used for the RIS. This is not limited in this application. The following uses the RIS apparatus as an example for description.

The method may include: receiving a signal from at least one first communication apparatus; and sending the signal to at least two second communication apparatuses via a plurality of beams, where a beam vector for the plurality of beams is determined based on a beam vector for a single beam corresponding to each of the at least two second communication apparatuses.

Based on the foregoing technical solution, the RIS may simultaneously send (or forward or reflect) a signal to a plurality of communication apparatuses (that is, second communication apparatuses) via a plurality of beams, where a beam vector for the plurality of beams is determined based on a beam vector for a single beam corresponding to each of the second communication apparatuses. In this way, the plurality of second communication apparatuses can be simultaneously served via the RIS, thereby increasing a system capacity.

With reference to the first aspect, in some implementations of the first aspect, that the beam vector for the plurality of beams is determined based on the beam vector for the single beam corresponding to each of the at least two second communication apparatuses includes: The beam vector for the plurality of beams is determined based on a first beam vector and an offset, and the offset is determined based on the beam vector for the single beam corresponding to each of the at least two second communication apparatuses.

Based on the foregoing technical solution, the beam vector for the plurality of beams may be determined based on the beam vector for the single beam and the offset. In this way, when the beam vector for the plurality of beams is indicated, the beam vector for the single beam and the offset may be directly indicated, thereby reducing signaling overheads.

With reference to the first aspect, in some implementations of the first aspect, the method further includes: receiving first indication information, where the first indication information indicates the offset; or determining the offset.

With reference to the first aspect, in some implementations of the first aspect, the method further includes: receiving second indication information, where the second indication information indicates the first beam vector; or determining the first beam vector.

Optionally, the second indication information includes an index of the first beam vector.

With reference to the first aspect, in some implementations of the first aspect, the offset includes a phase offset and/or an amplitude offset.

With reference to the first aspect, in some implementations of the first aspect, that the beam vector for the plurality of beams is determined based on the beam vector for the single beam corresponding to each of the at least two second communication apparatuses includes: The beam vector for the plurality of beams is determined based on the beam vector for the single beam corresponding to each of the second communication apparatuses and a first policy.

Based on the foregoing technical solution, the beam vector for the plurality of beams may be determined based on the beam vector for the single beam corresponding to each of the second communication apparatuses and a policy (that is, the first policy). In this way, when the beam vector for the plurality of beams is indicated, beam information of the single beam corresponding to each of the second communication apparatuses may be directly indicated, and the RIS apparatus may determine the beam vector for the plurality of beams based on the beam information of the single beam corresponding to each of the second communication apparatuses and the first policy.

With reference to the first aspect, in some implementations of the first aspect, the method further includes: receiving third indication information, where the third indication information indicates the beam vector for the single beam corresponding to each of the second communication apparatuses; or determining the beam vector for the single beam corresponding to each of the second communication apparatuses.

Optionally, the third indication information includes a beam vector for a single beam corresponding to at least one second communication apparatus.

With reference to the first aspect, in some implementations of the first aspect, the method further includes: receiving fourth indication information, where the fourth indication information indicates the first policy; or the first policy is predefined; or determining the first policy.

With reference to the first aspect, in some implementations of the first aspect, the first policy includes a phase processing policy and/or an amplitude processing policy.

With reference to the first aspect, in some implementations of the first aspect, the amplitude offset is 1/sqrt(N), where N is a quantity of beams of the plurality of beams, and a function sqrt() is a square root function.

With reference to the first aspect, in some implementations of the first aspect, before the sending the signal to the at least two second communication apparatuses via the plurality of beams, the method further includes: sending a reference signal to the second communication apparatus; and receiving fifth indication information, where the fifth indication information indicates a beam vector for a single beam corresponding to the second communication apparatus, and the beam vector for the single beam corresponding to the second communication apparatus is obtained by performing measurement based on the reference signal.

Based on the foregoing technical solution, the beam vector for the single beam corresponding to the second communication apparatus may be obtained through measurement.

With reference to the first aspect, in some implementations of the first aspect, the method further includes: sending capability information of the RIS apparatus, where the capability information of the RIS apparatus includes at least one of the following: a maximum quantity of beams supported by the RIS apparatus and information about a combined beam supported by the RIS apparatus.

For example, the maximum quantity of beams supported by the RIS apparatus is a maximum quantity of beams simultaneously supported by the RIS apparatus.

For example, the information about the combined beam supported by the RIS apparatus includes one or more of the following: angular resolution of the combined beam, a beam width of the combined beam (for example, a maximum beam width, a minimum beam width, or an average beam width), a beam angle of the combined beam (for example, a maximum beam angle, a minimum beam angle, or an average beam angle), and a beam radian value of the combined beam (for example, a maximum beam radian value, a minimum beam radian value, or an average beam radian value).

With reference to the first aspect, in some implementations of the first aspect, the sending the signal to the at least two second communication apparatuses via the plurality of beams includes: sending the signal to N second communication apparatuses via N beams, where the N beams are in one-to-one correspondence with the N second communication apparatuses, and N is an integer greater than 1.

According to a second aspect, a signal transmission method is provided. The method may be performed by a communication apparatus. The communication apparatus may be a terminal device or a network device, or may be a chip or a circuit used for the terminal device or the network device. This is not limited in this application. The following uses a control apparatus as an example for description.

The method may include: sending first indication information or third indication information, where the first indication information indicates an offset, the offset is determined based on a beam vector for a single beam corresponding to each of at least two second communication apparatuses, and the third indication information indicates the beam vector for the single beam corresponding to each of the second communication apparatuses.

With reference to the second aspect, in some implementations of the second aspect, the method further includes: sending second indication information, where the second indication information indicates a first beam vector.

With reference to the second aspect, in some implementations of the second aspect, the offset includes a phase offset and/or an amplitude offset.

With reference to the second aspect, in some implementations of the second aspect, the amplitude offset is 1/sqrt(N), where N is a quantity of beams of a plurality of beams, and a function sqrt() is a square root function.

With reference to the second aspect, in some implementations of the second aspect, the method further includes: sending fourth indication information, where the fourth indication information indicates a first policy.

With reference to the second aspect, in some implementations of the second aspect, the first policy includes a phase processing policy and/or an amplitude processing policy.

With reference to the second aspect, in some implementations of the second aspect, the method further includes: receiving capability information of an RIS apparatus, where the capability information of the RIS apparatus includes at least one of the following: a maximum quantity of beams supported by the RIS apparatus and information about a combined beam supported by the RIS apparatus.

According to a third aspect, a signal transmission method is provided. The method may be performed by a communication apparatus. The communication apparatus may be a terminal device or a network device, or may be a chip or a circuit used for the terminal device or the network device. This is not limited in this application. The following uses a second communication apparatus as an example for description.

The method may include: receiving a signal from at least one first communication apparatus via a reception beam, where a beam vector for the reception beam is determined based on a beam vector for a single beam corresponding to each of at least two second communication apparatuses.

With reference to the third aspect, in some implementations of the third aspect, that the beam vector for the reception beam is determined based on the beam vector for the single beam corresponding to each of the at least two second communication apparatuses includes: The beam vector for the reception beam is determined based on a first beam vector and an offset, and the offset is determined based on the beam vector for the single beam corresponding to each of the at least two second communication apparatuses.

With reference to the third aspect, in some implementations of the third aspect, the offset includes a phase offset and/or an amplitude offset.

With reference to the third aspect, in some implementations of the third aspect, that the beam vector for the reception beam is determined based on the beam vector for the single beam corresponding to each of the at least two second communication apparatuses includes: The beam vector for the reception beam is determined based on the beam vector for the single beam corresponding to each of the second communication apparatuses and a first policy.

With reference to the third aspect, in some implementations of the third aspect, the first policy includes a phase processing policy and/or an amplitude processing policy.

With reference to the third aspect, in some implementations of the third aspect, the amplitude offset is 1/sqrt(N), where N is a quantity of beams of the reception beam, and a function sqrt() is a square root function.

With reference to the third aspect, in some implementations of the third aspect, before the receiving the signal from the at least one first communication apparatus via the reception beam, the method further includes: receiving a reference signal; and sending fifth indication information, where the fifth indication information indicates a beam vector for a single beam corresponding to the second communication apparatus, and the beam vector for the single beam corresponding to the second communication apparatus is obtained by performing measurement based on the reference signal.

For beneficial effects and possible designs of the second aspect and the third aspect, refer to the related descriptions in the first aspect. Details are not described herein again.

According to a fourth aspect, a communication apparatus is provided. The apparatus is configured to perform the method in any one of the possible implementations of the first aspect to the third aspect. Specifically, the apparatus may include a unit and/or a module, for example, a processing unit and/or a communication unit, configured to perform the method in any one of the possible implementations of the first aspect to the third aspect.

In an implementation, the apparatus is a communication apparatus (for example, a terminal device, a network device, or an RIS). When the apparatus is a terminal device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a system on chip, or a circuit used in a communication apparatus (for example, a terminal device, a network device, or an RIS). When the apparatus is a chip, a system on chip, or a circuit used in a terminal device, the communication unit may be an input/output interface, an interface circuit, an output circuit, an input circuit, a pin, a related circuit, or the like on the chip, the system on chip, or the circuit; and the processing unit may be at least one processor, a processing circuit, a logic circuit, or the like.

According to a fifth aspect, a communication apparatus is provided. The apparatus includes at least one processor, configured to execute a computer program or instructions, to perform the method in any one of the possible implementations of the first aspect to the third aspect. Optionally, the apparatus further includes a memory, configured to store a computer program or instructions. Optionally, the apparatus further includes a communication interface, and the processor reads the computer program or the instructions through the communication interface.

In an implementation, the apparatus is a communication apparatus (for example, a terminal device, a network device, or an RIS).

In another implementation, the apparatus is a chip, a system on chip, or a circuit used in a communication apparatus (for example, a terminal device, a network device, or an RIS).

According to a sixth aspect, a processor is provided, configured to perform the methods provided in the first aspect to the third aspect.

Operations such as sending and obtaining/receiving related to the processor may be understood as operations such as outputting, receiving, and inputting of the processor or sending and receiving operations performed by a radio frequency circuit and an antenna, unless otherwise specified, or provided that the operations do not contradict actual functions or internal logic of the operations in related descriptions. This is not limited in this application.

Optionally, the apparatus further includes a memory, configured to store a program. Correspondingly, at least one processor is configured to execute the computer program or instructions in the memory.

Optionally, the apparatus further includes a communication interface. The communication interface is coupled to the processor, and may be configured to input information to the processor, or output information in the processor.

According to a seventh aspect, a computer-readable storage medium is provided. The computer-readable storage medium stores program code to be executed by a device, and the program code is used to perform the method in any one of the possible implementations of the first aspect to the third aspect.

According to an eighth aspect, a computer program product including instructions is provided. When the computer program product runs on a computer, the computer is caused to perform the method in any one of the possible implementations of the first aspect to the third aspect.

According to a ninth aspect, a chip is provided. The chip includes a processor and a communication interface. The processor reads instructions in a memory through the communication interface, to perform the method provided in any one of the implementations of any one of the first aspect to the third aspect.

Optionally, in an implementation, the chip further includes a memory. The memory stores a computer program or instructions. The processor is configured to execute the computer program or the instructions in the memory. When the computer program or the instructions are executed, the processor is configured to perform the method provided in any one of the implementations of any one of the first aspect to the third aspect.

According to a tenth aspect, a computer program product including instructions is provided. When the computer program product runs on a computer, the computer is caused to perform the method provided in any one of the implementations of the first aspect.

According to an eleventh aspect, a communication system is provided, including one or more of the RIS apparatus, the first communication apparatus, and the second communication apparatus described above.

### BRIEF DESCRIPTION OF DRAWINGS

FIG. 1 is a diagram of a wireless communication system applicable to an embodiment of this application;
FIG. 2A and FIG. 2B are diagrams applicable to RIS MU-MIMO;
FIG. 3 is a diagram of a signal transmission method 300 according to an embodiment of this application;
FIG. 4 is a diagram of RIS MU-MIMO applicable to an embodiment of this application;
FIG. 5 is a schematic flowchart of a signal transmission method 500 applicable to an embodiment of this application;
FIG. 6 is a schematic flowchart of a signal transmission method 600 applicable to an embodiment of this application;
FIG. 7 is a diagram of a communication apparatus 700 according to an embodiment of this application;
FIG. 8 is a diagram of another communication apparatus 800 according to an embodiment of this application; and
FIG. 9 is a diagram of a system on chip 900 according to an embodiment of this application.

### DESCRIPTION OF EMBODIMENTS

The following describes technical solutions of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system. The technical solutions provided in this application may be further applied to device-to-device (device to device, D2D) communication, vehicle-to-everything (vehicle-to-everything, V2X) communication, machine-to-machine (machine to machine, M2M) communication, machine type communication (machine type communication, MTC), and an internet of things (internet of things, IoT) communication system. The technical solutions provided in this application may be further applied to a low-frequency scenario, a highfrequency scenario, terahertz, optical communication, a licensed (licensed) frequency band, an unlicensed (unlicensed) frequency band, or the like. The technical solutions provided in this application may be further applied to non-terrestrial network (non-terrestrial network, NTN) systems such as an inter-satellite communication system and a satellite communication system. In an example, the satellite communication system includes a satellite base station and a terminal device. The satellite base station provides a communication service for the terminal device. The satellite base station may also communicate with a base station. A satellite may serve as a base station, or may serve as a terminal device. The satellite may be an uncrewed aerial vehicle, a hot air balloon, a low earth orbit satellite, a medium earth orbit satellite, a high earth orbit satellite, or the like. Alternatively, the satellite may be a non-terrestrial base station, a non-terrestrial device, or the like.

A device in a communication system may send a signal to another device or receive a signal from another device. The signal may include information, signaling, data, or the like. The device may be replaced with an entity, a network entity, a network element, a communication device, a communication module, a node, a communication node, or the like. In this disclosure, the device is used as an example for description. For example, the communication system may include at least one terminal device and at least one network device. The network device may send a downlink signal to the terminal device, and/or the terminal device may send an uplink signal to the network device.

The terminal device in embodiments of this application includes various devices having a wireless communication function, and the terminal device may be configured to connect persons, objects, machines, and the like. The terminal device may be widely used in various scenarios, such as cellular communication, D2D, V2X, peer-to-peer (peer to peer, P2P), M2M, MTC, IoT, virtual reality (virtual reality, VR), augmented reality (augmented reality, AR), industrial control, autonomous driving, telemedicine, smart grid, smart home, smart office, smart wearable, smart transportation, smart city, uncrewed aerial vehicle, robot, remote sensing, passive sensing, positioning, navigation and tracking, and autonomous delivery. The terminal device may be a terminal in any one of the foregoing scenarios, such as an MTC terminal or an IoT terminal. The terminal device may be a user equipment (user equipment, UE) in a 3rd generation partnership project (3rd generation partnership project, 3GPP) standard, a terminal (terminal), a fixed device, a mobile station (mobile station) device or a mobile device, a subscriber unit (subscriber unit), a handheld device, a vehicle-mounted device, a wearable device, a cellular phone (cellular phone), a smartphone (smartphone), a SIP phone, a wireless data card, a personal digital assistant (personal digital assistant, PDA), a computer, a tablet computer, a notebook computer, a wireless modem, a handset (handset), a laptop computer (laptop computer), a computer having wireless receiving and sending functions, a smart book, a vehicle, a satellite, a global positioning system (global positioning system, GPS) device, a target tracking device, an aircraft (for example, an uncrewed aerial vehicle, a helicopter, a multi-helicopter, a quadcopter, or an airplane), a ship, a remote control device, a smart home device, an industrial device, an apparatus built in the foregoing device (for example, a communication module, a modem, or a chip in the foregoing device), or another processing device connected to a wireless modem. For ease of description, an example in which the terminal device is a terminal or a UE is used below for description.

It should be understood that in some scenarios, the UE may be further configured to serve as a base station. For example, the UE may serve as a scheduling entity that provides a sidelink signal between UEs in a scenario such as V2X, D2D, or P2P.

In embodiments of this application, an apparatus configured to implement a function of the terminal device, that is, a terminal apparatus, may be the terminal device, or may be an apparatus that can support the terminal device in implementing the function, for example, a system on chip or a chip. The apparatus may be installed in the terminal device. In embodiments of this application, the system on chip may include a chip, or may include a chip and another discrete component.

The network device in embodiments of this application may be a device for communicating with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover any of the following names in a broad sense, or may be replaced with the following name, for example, a NodeB (NodeB), an evolved NodeB (evolved NodeB, eNB), a next generation NodeB (next generation NodeB, gNB), a relay station, an access point, a transmitting and receiving point point (transmitting and receiving point, TRP), a transmission point, a primary station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), or a positioning node. In a possible design, a processing unit for implementing a baseband function in the BBU is referred to as a base band high (base band high, BBH) unit, and a processing unit for implementing a baseband function in the RRU/AAU/RRH is referred to as a base band low (base band low, BBL) unit. The base station may be a macro base station, a micro base station, a relay node, a donor node, or the like, or a combination thereof. Alternatively, the base station may be a communication module, a modem, or a chip arranged in the foregoing device or apparatus. Alternatively, the base station may be a mobile switching center, a device that functions as a base station in D2D, V2X, or M2M communication, a network side device in a future communication system, a device that functions as a base station in a future communication system, or the like. The base station may support networks using a same access technology or different access technologies. Embodiments of this application constitute no limitation on a specific technology and a specific device form used for the network device.

In some deployments, the network device mentioned in embodiments of this application may be a device including a CU or a DU, a device including a CU and a DU, or a device including a control plane CU node (a central unit-control plane (central unit-control plane, CU-CP)), a user plane CU node (a central unit-user plane (central unit-user plane, CU-UP)), and a DU node. For example, the network device may include a gNB-CU-CP, a gNB-CU-UP, and a gNB-DU.

In some deployments, a plurality of RAN nodes cooperatively assist the terminal in implementing radio access, and different RAN nodes separately implement some functions of the base station. For example, the RAN node may be a CU, a DU, a CU-CP, a CU-UP, or a radio unit (radio unit, RU). The CU and the DU may be separately disposed, or may be included in a same network element, for example, in a BBU. The RU may be included in a radio frequency device or a radio frequency unit, for example, included in an RRU, an AAU, or an RRH.

In different systems, the CU (or the CU-CP and the CU-UP), the DU, or the RU may also have different names, but a person skilled in the art may understand meanings thereof. For example, the radio access network may also be an open radio access network (open radio access network, O-RAN) architecture. In an ORAN system, the CU may also be referred to as an open CU (open CU, O-CU), the DU may also be referred to as an open DU (open DU, O-DU), the CU-CP may also be referred to as an open CU-CP (open CU-CP, O-CU-CP), the CU-UP may also be referred to as an open CU-UP (open CU-UP, O-CU-UP), and the RU may also be referred to as an open RU (open RU, O-RU). Any of the CU (or the CU-CP or the CU-UP), the DU, and the RU in this application may be implemented by a software module, a hardware module, or a combination of the software module and the hardware module.

The base station may be fixed or mobile. For example, a helicopter or an uncrewed aerial vehicle may be configured as a mobile base station, and one or more cells may move based on a location of the mobile base station. In other examples, a helicopter or an uncrewed aerial vehicle may be configured as a device for communicating with another base station.

In embodiments of this application, an apparatus configured to implement a function of the network device may be the network device, or may be an apparatus that can support the network device in implementing the function, for example, a system on chip or a chip. The apparatus may be installed in the network device. In embodiments of this application, the system on chip may include a chip, or may include a chip and another discrete component. In embodiments of this application, an example in which the apparatus configured to implement the function of the network device is the network device is merely used for description, and constitutes no limitation on the solutions in embodiments of this application.

The network device and the terminal device may be deployed on land, including an indoor or outdoor device, a handheld device, or a vehicle-mounted device; may be deployed on water; or may be deployed on an airplane, a balloon, and a satellite in air. A scenario in which the network device and the terminal device are located is not limited in embodiments of this application. In addition, the terminal device and the network device may be hardware devices, or may be software functions running on dedicated hardware or software functions running on general-purpose hardware, for example, virtual functions instantiated on a platform (for example, a cloud platform), or an entity including a dedicated or general-purpose hardware device and a software function. This application constitutes no limitation on specific forms of the terminal device and the network device.

First, a communication system applicable to an embodiment of this application is briefly described below.

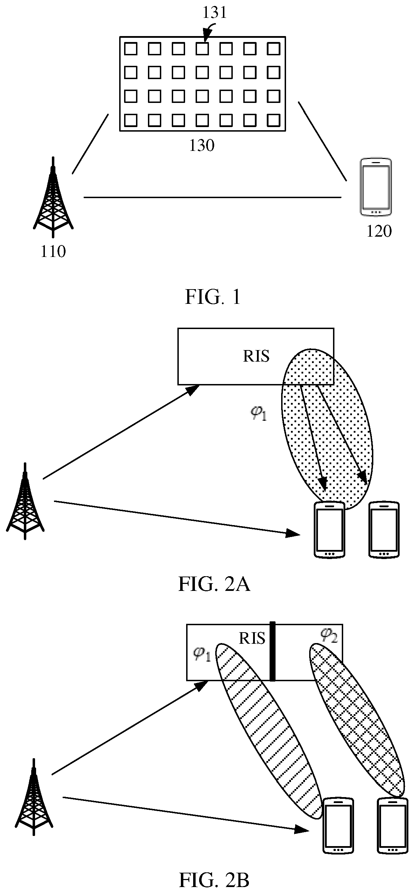

FIG. 1 is a diagram of a wireless communication system applicable to an embodiment of this application.

As shown in FIG. 1, the wireless communication system includes at least one network device, for example, a network device 110 shown in FIG. 1. The wireless communication system may further include at least one terminal device, for example, a terminal device 120 shown in FIG. 1. A plurality of antennas may be configured for each of the network device and the terminal device, and the network device and the terminal device may communicate with each other by using a multi-antenna technology.

As shown in FIG. 1, the wireless communication system further includes a reconfigurable intelligent surface (reconfigurable intelligent surface, RIS) 130. The RIS may be used to assist in communication between devices, for example, between the network device and the terminal device. For example, if a transmitter (for example, a network device, or a terminal device) and a receiver (for example, a network device, or a terminal device) cannot directly communicate with each other, or a signal is weak during direct communication, for example, when there is an obstacle between the transmitter and the receiver, communication may be implemented via the RIS.

The RIS may be referred to as an RIS apparatus, and may also be referred to as an intelligent reflective surface (intelligent reflective surface, IRS) or a large intelligent surface (large intelligent surface, LIS). The RIS is an artificial two-dimensional material with a sub-wavelength size, and is usually composed of metal, dielectric, and adjustable elements, and may be equivalently represented as a radio link control (radio link control, RLC) circuit. Radiation characteristics of the RIS can be changed by adjusting physical properties of an electromagnetic unit, such as capacitive reactance, impedance, or inductive reactance, to achieve unconventional physical phenomena, such as irregular reflection, negative refraction, wave absorption, focusing, and polarization conversion, thereby dynamically regulating electromagnetic waves. The RIS may control a bias voltage of a variable capacitance diode, a PIN switch, a micro-electro-mechanical system (micro electro mechanical system, MEMS) switch, a liquid crystal, graphene, or the like, to generate an electromagnetic behavior required by each electromagnetic unit.

The RIS may be considered as a reflective panel, and the reflective panel is represented as an intelligent panel including a plurality of antenna units 131 (briefly referred to as units). Each unit may serve as a passive reflective component, and a parameter (such as an amplitude and/or a phase) of each unit may be flexibly configured to control radio channel fading and form an expected directional beam. A unit of the RIS or an RIS unit described below represents a unit on the RIS, and is also referred to as a unit in the RIS.

The RIS may be installed in various environments. For example, the RIS is installed on a large plane (for example, an indoor wall or ceiling, or an outdoor building or sign), to reflect radio frequency (radio frequency, RF) energy around an obstacle and create a virtual line-of-sight (line of sight, LoS) propagation path between a communication source and a target. For example, advantages of the RIS may include the following several aspects.
(1) Enhanced spectral efficiency: The RIS can further improve communication quality of radio links through intelligent control on units, enhance strength of wanted signals at the receiver, reduce strength of channel interference, and provide a breakthrough point for implementation of future overall intelligent networks.
(2) Reduced energy consumption and device complexity: The RIS may passively reflect received signals, and there is no need to configure transmitting and receiving units on an RIS side and no need to encode or decode data. Therefore, complexity of an actual hardware device of the RIS can be significantly reduced compared with that of the network device and the terminal device, thereby reducing system energy consumption of wireless networks.
(3) Easy deployment: Because the RIS includes only an electromagnetic component for passive reflection, the RIS can be easily deployed on surfaces of various buildings, indoor walls, platforms, roadside billboards, highway signs, vehicle windows, and other devices. In addition, the RIS can be removed or re-deployed at any time based on network requirements.
(4) Compatibility: The RIS may be considered as a supplementary device to an existing network, and therefore does not affect existing protocols and requires no modification to current devices, which offers compatibility.
(5) Full-duplex: Compared with a relay (relay) system running in a half-duplex mode, the RIS may perform only passive reflection and therefore may run in a full-duplex mode, thereby improving spectral efficiency.

The foregoing descriptions of the RIS are merely an example for description. This is not limited in embodiments of this application. In addition, in the following embodiments, the RIS is mainly used as an example for description. However, any device or apparatus that can implement a function of the RIS is applicable to embodiments of this application. In addition, in the following embodiments, an example in which the RIS sends a signal is mainly used for description. It may be understood that the RIS sending a signal may be replaced with the RIS reflecting a signal, or the RIS forwarding a signal.

Moreover, FIG. 1 is merely a diagram. The wireless communication system may further include another device, for example, may further include a core network device, a wireless relay device, and/or a wireless backhaul device, and more network devices and terminal devices, which are not shown in FIG. 1.

To facilitate better understanding of the technical solutions of this application, some related technologies in the technical solutions of this application are described.
1. Signal: represents a symbol, data, a message, or the like transmitted through a medium (for example, an electromagnetic wave, an optical wave, or a sound wave). The signal may be decoded and understood by a receiver. The signal may be an analog signal, a digital signal, or the like.

For example, the signal is a reference signal (reference signal, RS). The reference signal may also be referred to as a pilot signal or a pilot, and is a known signal. For example, the reference signal may be a signal provided by a transmitter for the receiver for channel estimation, channel sounding, data demodulation, or the like. For example, in a multiple-input multiple-output (multiple-input multiple-output, MIMO) system, each transmit antenna (virtual antenna or physical antenna) has an independent data channel. Based on a known reference signal, the receiver performs channel estimation for each transmit antenna, and restores sent data based on this. Channel estimation means a process of reconstructing a received signal to compensate for channel fading and noise, and changes in time domain and frequency domain of a channel are tracked by using the reference signal known to the transmitter and the receiver.

In this application, for example, the reference signal may be any one of the following: a channel state information reference signal (channel state information reference signal, CSI-RS), a sounding reference signal (sounding reference signal, SRS), a demodulation reference signal (demodulation reference signal, DMRS), a phase tracking reference signal (phase tracking reference signal, PT-RS), a cell reference signal (cell reference signal, CRS), and the like. The DMRS may be used for demodulation of a physical downlink shared channel (physical downlink shared channel, PDSCH) or a physical uplink shared channel (physical uplink shared channel, PUSCH). The CSI-RS may be used for channel information measurement and reporting of channel state information (channel state information, CSI). The channel state information includes at least one of the following: a precoding matrix indicator (precoding matrix indicator, PMI), a rank indication (rank indication, RI), and a channel quality indicator (channel quality indicator, CQI).

There are a plurality of types of reference signals. With continuous evolution of standards, a name of the reference signal may change, and more reference signals may emerge. This is not specifically limited.

For example, the signal is data or a message, and the data may be a to-be-sent data packet, modulated data, a frequency-domain signal and a time-domain signal generated by mapping data to a time-frequency resource, or the like. Alternatively, the signal may be control information. For example, the control information may be control information of a physical layer, or may be control information of an upper layer.

2. Beam (beam): is a communication resource. Different beams may be considered as different resources. Same information or different information may be sent via different beams.

The beam in an NR protocol may be embodied as a spatial domain filter (spatial domain filter) that is also referred to as a spatial filter (spatial filter) or a spatial parameter (spatial parameter). A beam used to send a signal may be referred to as a transmission beam (transmission beam, Tx beam), and a beam used to receive a signal may be referred to as a reception beam (reception beam, Rx beam).

The transmission beam may be signal strength distribution formed in different directions in space after a signal is transmitted through an antenna, and the reception beam may be signal strength distribution, in different directions in space, of a radio signal received from an antenna.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital/analog beamforming technology, or the like.

One beam may correspond to one or more antenna ports, and is used to transmit a data channel, a control channel, a sounding signal, and the like. The one or more antenna ports corresponding to the beam may also be considered as one antenna port set.

In embodiments of this application, a "beam" and a "beam vector" are mentioned for a plurality of times. It may be understood that the "beam" is signal strength distribution formed in a specific direction in space, and the "beam vector" may represent the "beam". For example, the "beam vector" may be understood as a mathematical expression of the "beam", and one beam vector may be used to form one beam. Specifically, the transmitter may separately precode one or more signals based on one or more predefined beam vectors, and send the precoded signal. The precoded signal has specific directionality. Therefore, the precoded signal transmitted by the transmitter based on one port may be understood as a beam in a specific direction.

3. RIS precoding/beamforming: Similar to the precoding technology in a conventional multi-user MIMO (multi-user MIMO, MU-MIMO) system, precoding can properly utilize channel state information and preprocess a transmitted signal to improve reception performance. For example, a beam may be adjusted to be transmitted in a specific direction by regulating a parameter (such as a phase and/or an amplitude) of each electromagnetic unit of the RIS, thereby reducing a transmit power of a required signal, improving spectral efficiency, extending coverage, and weakening interference.

Beamforming design mainly includes precoding and equalization matrix design for a multi-antenna transceiver, to implement directional signal transmission. Introduction of the RIS makes the beamforming design of the system more complex. Based on a programmable feature of the RIS, the RIS may serve as an external analog precoder, and a corresponding phase shift matrix is designed, that is, the RIS performs reflection regulation on a signal from a transmitter by using analog beamforming.

4. RIS communication enhancement application scenarios: include coverage enhancement and coverage hole mitigation. For example, deploying one or more RISs at an edge of a cell or in coverage holes caused by blockage or deep fading can achieve effects of coverage extension and coverage hole mitigation.

Another potential application scenario of the RIS is rank increase. Based on the RIS, channels can be actively changed, and more transmission paths with controllable gains can be provided. A network device can actively control quality of a radio channel between the network device and a UE via the RIS (for example, enhance a link gain or increase a quantity of eigen subchannels). Therefore, RIS-based communication rank increase has become a possible application scenario. Especially in a centimeter-wave frequency (such as 10 GHz), an RIS-MIMO system has lower path loss and richer scattering compared with a high frequency. In addition to a coverage enhancement function, rank enhancement may be one of the potential main characteristics of the centimeter-wave RIS-MIMO system. RIS MU-MIMO is a design perspective to be considered for the centimeter-wave RIS-MIMO system. RIS MU-MIMO represents that a plurality of users are simultaneously served based on the RIS. In other words, the RIS sends a signal to a plurality of users simultaneously.

FIG. 2A and FIG. 2B are diagrams of implementing RIS MU-MIMO. As shown in FIG. 2A and FIG. 2B, for RIS MU-MIMO, the following two manners may be included.

Manner 1: A wide beam is constructed to serve a plurality of users. As shown in FIG. 2A, an RIS may use one wide beam to serve a plurality of UEs. This manner imposes a limitation on physical locations of the plurality of users. Specifically, the plurality of users can be served via one wide beam only when the physical locations of the plurality of users are close. However, when the physical locations of the plurality of users are close, interference between the users is large, and further system performance is affected.

Manner 2: A plurality of single beams are constructed for a plurality of users. As shown in FIG. 2B, when a network device transmits a signal to a UE 1 via the RIS, the RIS sends the signal via a beam φ1 corresponding to the UE 1; and when the network device transmits a signal to a UE 2 via the RIS, the RIS sends the signal via a beam φ2 corresponding to the UE 2. This manner has a requirement on a scale of RIS units. Specifically, the RIS units are divided into a plurality of parts, each part of units correspond to one UE, and a single beam of the UE is separately trained based on the units corresponding to the UE. In this way, each UE corresponds to a small quantity of units, and a reduction in the unit scale causes a reduction in an array gain, weakening a coverage enhancement effect of the RIS.

This application provides a solution to combine a plurality of beams by designing a reflection coefficient (also referred to as a sending coefficient, a weight coefficient, a weight vector, or a weight matrix) of an RIS unit. Specifically, for a plurality of users, a reflection coefficient of the RIS unit (that is, a beam vector for a plurality of beams corresponding to the plurality of users) used when the plurality of users are simultaneously served via the RIS is determined based on a reflection coefficient of an RIS unit (that is, a beam vector for a single beam corresponding to each user) used when each user is separately served via the RIS. In this way, the plurality of users can be served via the RIS, thereby increasing a system capacity, and a coverage enhancement effect of the RIS is not weakened compared with the foregoing manner 2.

Before the solutions of this application are described, the following descriptions are provided.
(1) In this application, an "indication" may include a direct indication, an indirect indication, an explicit indication, and an implicit indication. When a piece of indication information is described as indicating A, it may be understood as that the indication information carries A, directly indicates A, or indirectly indicates A.

In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, the to-be-indicated information may be sent together as a whole, or may be divided into a plurality of pieces of sub-information and sent separately. In addition, sending periodicities and/or sending occasions of these pieces of sub-information may be the same or different.

(2) In this application, "sending" and "receiving" indicate directions of signal transmission. For example, "sending information to XX" may be understood as that a destination of the information is XX, and may include direct sending through an air interface, or include indirect sending by another unit or module through an air interface. "Receiving information from YY" may be understood as that a source of the information is YY, and may include direct receiving from YY through an air interface, or may include indirect receiving from YY via another unit or module through an air interface. "Sending" may also be understood as "outputting" of a chip interface, and "receiving" may also be understood as "inputting" of the chip interface. In other words, sending and receiving may be performed between devices, for example, performed between a network device and a terminal device, or may be performed within a device. For example, sending or receiving is performed between components, modules, chips, software modules, or hardware modules within a device through a bus, a trace, or an interface. In addition, unless otherwise stated, "transmission" includes receiving and/or sending. For example, transmitting a signal may include receiving a signal and/or sending a signal.

(3) In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

(4) In this application, "first" and "second" are merely for ease of description, and are used to distinguish between objects, but are not intended to limit the scope of embodiments of this application, and are not intended to describe an order or a sequence of features. It should be understood that objects described in such a way are interchangeable in an appropriate circumstance, so that a solution other than embodiments of this application can be described.

(5) In this application, "predefinition" may represent predefinition in a standard protocol, or may represent pre-agreement or pre-negotiation between devices.

(6) Formulas in embodiments of this application are merely examples for description, and do not limit the protection scope of embodiments of this application. In a process of calculating the foregoing related parameters, calculation may be performed according to the foregoing formulas, or calculation may be performed based on variations of the foregoing formulas, or calculation may be performed in another manner, to satisfy calculation results of the formulas.

A method provided in embodiments of this application is described in detail below with reference to the accompanying drawings. Embodiments provided in this application may be applied to the communication system shown in FIG. 1. This is not limited.

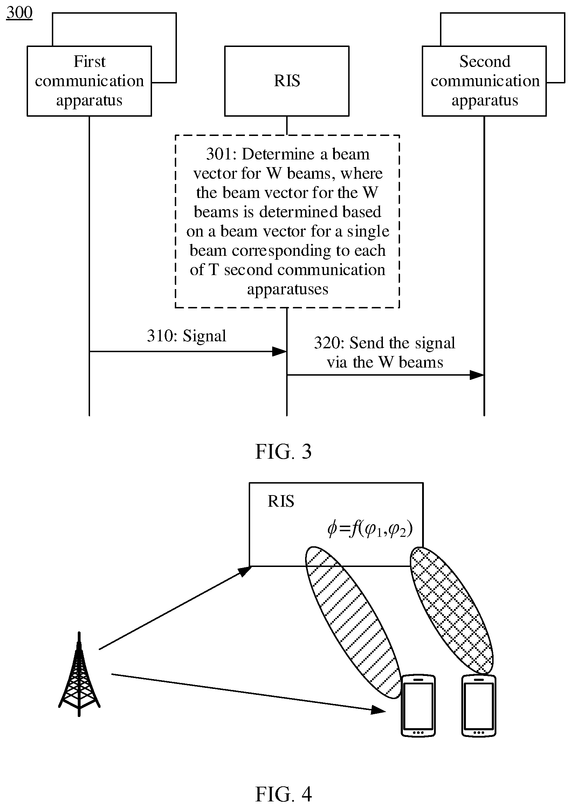

FIG. 3 is a diagram of a signal transmission method 300 according to an embodiment of this application. The method 300 shown in FIG. 3 may include the following steps. In the following embodiments, an RIS is mainly used as an example for description. However, any device or apparatus that can implement a function of the RIS is applicable to embodiments of this application.

310: An RIS receives a signal from at least one first communication apparatus.

The RIS may receive a signal from a same first communication apparatus, or may receive signals from a plurality of different first communication apparatuses. This is not limited.

For example, the signal is any one of the following: data, a message, or a reference signal. For the signal, refer to the descriptions in the foregoing term explanation part. Details are not described herein again.

320: The RIS sends the signal to T second communication apparatuses via W beams. Correspondingly, the T second communication apparatuses receive the signal. Beams (for example, referred to as reception beams) used by the T second communication apparatuses to receive the signal are beams corresponding to the W beams.

T is an integer greater than 1, and W is an integer greater than 1. W may be greater than or equal to T, or W may be less than or equal to T. For example, W=T.

The T second communication apparatuses represent second communication apparatuses simultaneously served via the RIS, that is, the RIS sends the signal to the T second communication apparatuses simultaneously.

In a possible case, the first communication apparatus is a network device or a component (for example, a chip or a circuit) of the network device, and the second communication apparatus is a terminal device or a component (for example, a chip or a circuit) of the terminal device.

In another possible case, the first communication apparatus is a terminal device or a component (for example, a chip or a circuit) of the terminal device, and the second communication apparatus is a network device or a component (for example, a chip or a circuit) of the network device.

In another possible case, the first communication apparatus is a terminal device or a component (for example, a chip or a circuit) of the terminal device, and the second communication apparatus is a terminal device or a component (for example, a chip or a circuit) of the terminal device.

In another possible case, the first communication apparatus is a network device or a component (for example, a chip or a circuit) of the network device, and the second communication apparatus is a network device or a component (for example, a chip or a circuit) of the network device.

The W beams represent beams used when the RIS sends the signal to the T second communication apparatuses, in other words, a set of beams used when the RIS sends the signal to the second communication apparatuses. For example, T=2, the T second communication apparatuses include a second communication apparatus #1 and a second communication apparatus #2, the RIS sends a signal to the second communication apparatus #1 via a first beam, and the RIS sends a signal to the second communication apparatus #2 via a second beam. In this case, the W beams include the first beam and the second beam. The first beam may be considered as a single beam corresponding to the second communication apparatus #1, and the second beam may be considered as a single beam corresponding to the second communication apparatus #2.

In step 320, signals sent by the RIS to different second communication apparatuses may be the same or may be different. This is not limited.

In a possible case, in step 310, the RIS receives a signal from one first communication apparatus; and in step 320, the RIS sends the signal to the T second communication apparatuses via a plurality of beams.

In another possible case, in step 310, the RIS receives a signal #1 from the first communication apparatus #1, and receives a signal #2 from the first communication apparatus #2; and in step 320, the RIS sends the signal #1 to the second communications apparatus #1 and sends the signal #2 to the second communications apparatus #2 via a plurality of beams.

Optionally, before step 310, the method 300 further includes step 301.

301: The RIS determines a beam vector for the W beams.

The beam vector for the W beams is determined based on a beam vector for a single beam corresponding to each of the T second communication apparatuses.

FIG. 4 is a diagram of RIS MU-MIMO applicable to an embodiment of this application. As shown in FIG. 4, when a first communication apparatus sends a signal to two second communication apparatuses via an RIS, the RIS sends the signal to the two second communication apparatuses via two beams, and a beam vector (for example, *ϕ*) for the two beams is determined based on a beam vector (for example, φ₁ and φ₂) for a single beam corresponding to each of the second communication apparatuses, that is, *ϕ = f* (*φ*₁,*φ*₂), where *f* represents a function.

The following first describes the beam vector.

In embodiments of this application, that is, unless otherwise stated, the beam vector represents a beam vector of the RIS. An element (also referred to as a vector element) in the beam vector corresponds to a unit of the RIS, that is, each unit may correspond to one element, and the element corresponding to the unit may also be referred to as a reflection coefficient or a weight coefficient of the unit. The beam vector may be replaced with a matrix, a weight coefficient vector, a weight coefficient matrix, a weight codebook (or briefly referred to as a codebook), a weight codeword (or briefly referred to as a codeword), a weight vector, or a vector. The beam vector uniformly is used for description below.

The beam vector of the RIS is a beam vector corresponding to the RIS, and is also referred to as a beam vector corresponding to a unit on the RIS, or a beam vector corresponding to an RIS beam (that is, a beam used when the RIS sends a signal). The beam vector of the RIS may be X-dimensional, where X is an integer greater than or equal to 1.

In a possible implementation, the beam vector of the RIS is a preset codebook, for example, a preconfigured codebook or a codebook predefined in a protocol.

In another possible implementation, the beam vector of the RIS is a preset or preconfigured X-dimensional vector, and elements of the X-dimensional vector are in one-to-one correspondence with units of the RIS. For example, a quantity of units of the RIS is P, and the beam vector may be a P*1 one-dimensional vector, that is, each unit may correspond to one element; or the beam vector may be a P*P two-dimensional vector, that is, units of the RIS may correspond to P elements of the two-dimensional vector, for example, P elements on a diagonal. Alternatively, the beam vector may exist in a form of a codeword. This is not limited.

In the following embodiments, an example in which the beam vector of the RIS is an M×N two-dimensional vector is used for description. M is a quantity of rows, N is a quantity of columns, and M and N are integers greater than 1. For example, M*N=P, where P is a quantity of units of the RIS.

In embodiments of this application, beam vectors of the RIS include two types: a beam vector for a single beam and a beam vector for a plurality of beams. For brevity, the beam vector for the single beam is referred to as a beam vector #A, and the beam vector for the plurality of beams is referred to as a beam vector #B. The beam vector #A may be considered as a vector in basic vectors (also referred to as first-level beam vectors, first-layer beam vectors, or preset vectors), and the beam vector #B may be considered to be determined based on the basic vector and indication information #A. The indication information #A may indicate at least one of the following: at least one beam vector #A, a first policy, and an offset. The indication information #A and the parameters are described in detail below with reference to Solution 1 and Solution 2. Descriptions are provided below separately.

### 1. Beam vector #A

The beam vector #A represents a beam vector for a single beam corresponding to the second communication apparatus. The beam vector #A may be used for single-user (per UE) transmission and/or measurement. Each of the second communication apparatuses may have a corresponding beam vector #A. In other words, T second communication apparatuses may correspond to T beam vectors #A.

The beam vector #A corresponding to the second communication apparatus may represent a beam vector of the RIS used when the first communication apparatus communicates with the second communication apparatus via the RIS, in other words, a beam vector used when the RIS sends a signal to the second communication apparatus, or a beam vector used when the second communication apparatus is separately served via the RIS. Optionally, the beam vector #A corresponding to the second communication apparatus is related to a relative location between the RIS and the second communication apparatus.

In a possible implementation, the beam vector #A is selected from a predefined beam vector set (or a preset codebook, or a steering vector set). Any two beam vectors in the beam vector set are different. For example, each beam vector in the beam vector set has a corresponding index (also referred to as an identifier or a number). In this way, a corresponding beam vector may be learned of by transmitting an index, thereby reducing signaling overheads. The beam vector set may be referred to as the basic vectors (also referred to as the first-level beam vectors or the first-level beam vectors). In other words, the beam vector #A is a basic vector.

For example, the RIS can learn of the beam vector set. For example, the beam vector set is preconfigured at the RIS. For another example, the beam vector set is predefined. For another example, the beam vector set is indicated to the RIS in advance. In this way, after obtaining an index of a beam vector, the RIS may determine the beam vector based on the index. Further optionally, the beam vector set has a time constraint. For example, the beam vector set may be periodically updated at the RIS. In other words, the basic vectors are updated at the RIS at regular intervals.

Optionally, the beam vector #A is determined through measurement. Based on this, the beam vectors #A corresponding to the T second communication apparatuses may be respectively determined by the T second communication apparatuses through measurement. A second communication apparatus is used as an example. In a possible implementation, the first communication apparatus sends a reference signal to the second communication apparatus via the RIS. The second communication apparatus performs measurement (also referred to as channel measurement or beam measurement) based on the received reference signal, and sends a measurement result (where the measurement result may also be referred to as a beam measurement result or a channel measurement result) to the first communication apparatus. The first communication apparatus may learn, based on the measurement result, of a beam vector #A corresponding to the second communication apparatus. That the second communication apparatus sends the measurement result to the first communication apparatus includes: The second communication apparatus directly sends the measurement result to the first communication apparatus, or the second communication apparatus sends the measurement result to the first communication apparatus via the RIS. In an example, the measurement result may include (or be represented as) at least one of the following: a reference signal received power (reference signal received power, RSRP) corresponding to a reference signal resource, a signal to noise ratio (signal to noise ratio, SNR) corresponding to the reference signal resource, and a signal to interference plus noise ratio (signal to interference plus noise ratio, SINR) corresponding to the reference signal resource. In another example, the measurement result may include an index of at least one beam vector.

For example, the first communication apparatus sends L reference signals to the second communication apparatus via the RIS, where the L reference signals (or L reference signal resources) correspond to L beam vectors of the RIS, and L is an integer greater than or equal to 1. The second communication apparatus performs measurement based on the received L reference signals, and sends a measurement result to the first communication apparatus, where the measurement result may include an index of at least one beam vector, the at least one beam vector is a beam vector corresponding to a reference signal whose signal quality is higher than or equal to a preset threshold, and the at least one beam vector is a beam vector #A corresponding to the second communication apparatus. For example, the measurement result includes an index of a beam vector corresponding to a reference signal with highest signal quality. The L reference signals corresponding to L beam vectors of the RIS may be replaced with the L reference signals corresponding to L codewords of a preset codebook of the RIS, or the L reference signals corresponding to L weight coefficient vectors of the RIS, or the L reference signals corresponding to L vectors in basic vectors.

For example, the signal quality may be represented by at least one of the following: an RSRP, an SNR, or an SINR. Further optionally, the beam vector #A has a time constraint. Specifically, for a second communication apparatus, a beam vector #A corresponding to the second communication apparatus may be associated with a time period, and the beam vector #A is valid in the time period. In other words, in the time period, the RIS may send a signal to the second communication apparatus based on the beam vector #A, or the RIS may determine a beam vector for a plurality of beams based on the beam vector #A. The beam vector #A is described above, and the beam vector #B is described below.

### 2. Beam vector #B

The beam vector #B represents a beam vector for forming W beams, and is used for multi-user multi-stream transmission and/or measurement. The T second communication apparatuses may correspond to one beam vector #B. The beam vector #B (also referred to as the beam vector for forming the W beams) corresponding to the T second communication apparatuses may represent a beam vector of the RIS used when at least one first communication apparatus communicates with the T second communication apparatuses simultaneously via the RIS, in other words, a beam vector used when the RIS sends a signal to the T second communication apparatuses simultaneously. In other words, an element in the beam vector #B is a reflection coefficient of an RIS unit used when the RIS sends a signal to the T second communication apparatuses simultaneously.

The beam vector #B corresponding to the T second communication apparatuses is related to the beam vectors #A of the T communication apparatuses. Specifically, the beam vector #B is determined based on the T beam vectors #A. The following describes two implementations.

In a first possible implementation, the beam vector #B is obtained by processing phases of the T beam vectors #A. For example, the beam vector #B is obtained by performing angle domain combination on the T beam vectors #A.

Two second communication apparatuses are used as an example, and are respectively referred to as a second communication apparatus #1 and a second communication apparatus #2 for differentiation. It is assumed that an index of a beam vector included in a measurement result fed back by the second communication apparatus #1 is 1, and the beam vector whose index is 1 is *φ*₁, that is, a beam vector #A corresponding to the second communication apparatus #1 is *φ*₁; and an index of a beam vector included in a measurement result fed back by the second communication apparatus #2 is 2, and the beam vector whose index is 2 is *φ*₂ , that is, a beam vector #A corresponding to the second communication apparatus #2 is *φ*₂ . It is assumed that ${φ}_{1} = \left[\begin{matrix}{φ}_{11}^{1} & ⋯ & {φ}_{1 N}^{1} \\ ⋮ & ⋱ & ⋮ \\ {φ}_{M 1}^{1} & ⋯ & {φ}_{MN}^{1}\end{matrix}\right]$, and ${φ}_{2} = \left[\begin{matrix}{φ}_{11}^{2} & ⋯ & {φ}_{1 N}^{2} \\ ⋮ & ⋱ & ⋮ \\ {φ}_{M 1}^{2} & ⋯ & {φ}_{MN}^{2}\end{matrix}\right]$. Based on this implementation, the beam vector #B may be obtained by processing phases of *φ*₁ and *φ*₂. For example, an element *ϕₘₙ* in the beam vector #B satisfies Formula 1: $\begin{matrix}{ϕ}_{mn} = cos \left({tan}^{- 1}\left(\frac{Im \left({φ}_{mn}^{1}\right)}{Re \left({φ}_{mn}^{1}\right)}\right)+{tan}^{- 1}\left(\frac{Im \left({φ}_{mn}^{2}\right)}{Re \left({φ}_{mn}^{2}\right)}\right)+⋯\right) \\ + 1 j sin \left({tan}^{- 1}\left(\frac{Im \left({φ}_{mn}^{1}\right)}{Re \left({φ}_{mn}^{1}\right)}\right)+{tan}^{- 1}\left(\frac{Im \left({φ}_{mn}^{2}\right)}{Re \left({φ}_{mn}^{2}\right)}\right)+⋯\right)\end{matrix}$ Formula 1 ${φ}_{mn}^{1}$ represents an element in the beam vector #A *φ*₁ corresponding to the second communication apparatus #1. Specifically, ${φ}_{mn}^{1}$ represents an element in an m^{th} row and an n^{th} column in *ϕ*₁. ${φ}_{mn}^{2}$ represents an element in the beam vector #A *φ*₂ corresponding to the second communication apparatus #2. Specifically, ${φ}_{mn}^{2}$ represents an element in an m^{th} row and an n^{th} column in *φ*₂. m is greater than or equal to 1, and is less than or equal to M, and n is greater than or equal to 1, and is less than or equal to N.

In a second possible implementation, the beam vector #B is obtained by processing amplitudes of the T beam vectors #A.

The foregoing two second communication apparatuses are still used as an example. Based on this implementation, the beam vector #B may be obtained by processing amplitudes of *φ*₁ and *φ*₂. For example, an element *ϕₘₙ* in the beam vector #B satisfies Formula 2: ${ϕ}_{mn} = {arg max}_{ϕ} \left\{{\sum }_{k = 1}^{W} {w}_{k}⋅{\sum }_{{θ}_{r} ∈ {ϑ}_{k}}^{W} {P}_{r} \left({θ}_{r}, ϕ\right)\right\}$ Formula 2

*Pᵣ*(*k*) represents an amplitude of a beam, for example, an amplitude of a k^{th} beam in the W beams; *wₖ* represents a signal power, for example, a power when a signal is sent via the k^{th} beam in the W beams; *θᵣ* represents an angle or a radian value corresponding to a beam center; arg max represents a function for calculating a maximum value, and arg max may be replaced with max; ${P}_{r} \left(k\right) = {w}_{k} ⋅ {\sum }_{{θ}_{r} ∈ {ϑ}_{k}}^{K} {P}_{r} \left({θ}_{r}, ϕ\right) , k ∈ \left[1,2…,W\right]$, where W is the quantity of beams described in step 320; *ϑₖ* represents an intermediate variable, where *ϑₖ =* (*θₖ -* Δ*θₖ, θₖ +* Δ*θₖ*); and Δ*θₖ* represents an angle or a radian value corresponding to a 3 dB beam width, that is, an included angle between a beam center direction and a direction corresponding to half of a power in the beam center direction.

The beam vector #A and the beam vector #B are separately described above. As described above, the beam vector #B may be considered to be determined based on the basic vector and the indication information #A. The following describes two possible solutions by using an example in which the RIS determines the beam vector #B.

For example, the RIS determines the beam vector #B in the following two solutions.

Solution 1: The RIS determines the beam vector #B based on the T beam vectors #A and a first policy.

Solution 2: The RIS determines the beam vector #B based on a beam vector #A (for differentiation, the beam vector #A is referred to as a beam vector #C) and an offset, where the offset is determined based on the T beam vectors #A. The beam vector #C may be one of the T beam vectors #A; or the beam vector #C may be determined based on the T beam vectors #A.

The following describes the two solutions in detail.

Solution 1: The RIS determines the beam vector #B based on the T beam vectors #A and the first policy.

In this solution, the indication information #A may include the T beam vectors #A and the first policy, and the T beam vectors #A are vectors in basic vectors. Specifically, the T beam vectors #A are determined from the basic vectors, for example, the T beam vectors #A are determined from the basic vectors based on measurement (that is, the foregoing channel measurement or beam measurement). Then, the RIS determines the beam vector #B based on the indication information #A (that is, the T beam vectors #A and the first policy). The first policy may also be referred to as an overlay rule or an overlay policy, and a name of the first policy does not constitute a limitation on the protection scope of embodiments of this application.

The first policy includes a phase processing policy and/or an amplitude processing policy. The phase processing policy may indicate a phase of the beam vector #B or how to adjust the phase when the beam vector #B is determined based on the T beam vectors #A. The amplitude processing policy may indicate an amplitude and/or a power of the beam vector #B or how to adjust the amplitude and/or the power when the beam vector #B is determined based on the T beam vectors #A. The following describes three examples.

Example 1: The first policy includes the phase processing policy.

The phase processing policy satisfies, for example, Formula 1. Specifically, the RIS may determine an element in the beam vector #B based on the T beam vectors #A according to Formula 1, to obtain the beam vector #B.

Example 2: The first policy includes the amplitude processing policy.

The amplitude processing policy satisfies, for example, Formula 2. Specifically, the RIS may determine an element in the beam vector #B based on the T beam vectors #A according to Formula 2, to obtain the beam vector #B.

Example 3: The first policy includes the phase processing policy and the amplitude processing policy.

The phase processing policy satisfies, for example, Formula 1.

The amplitude processing policy indicates an amplitude and/or a power of each element in the beam vector #B. For example, the amplitude processing policy indicates that an amplitude of each element in the beam vector #B is *w*ₖ and/or a power is *p*ₖ, where *k* ∈ [1, 2,...,*W*], and W is the quantity of beams described in step 320. In an example, amplitudes and powers of elements in the beam vector #B are the same. For example, *wₖ*=1/sqrt(W), and *p*ₖ=1/W. In another example, amplitudes and powers of at least two elements in the beam vector #B are different. For example, *w*ₖ and/or a power *p*ₖ of each element in the beam vector #B may be dynamically indicated. The function sqrt() is a square root function.

Specifically, the RIS may determine an element in the beam vector #B based on the T beam vectors #A according to Formula 1, and determine an amplitude of each element in the beam vector #B based on the amplitude processing policy, to obtain the beam vector #B.

In Solution 1, the RIS may independently determine the T beam vectors #A, or may determine the T beam vectors #A based on an indication. The following describes two manners.

Manner 1: The RIS independently determines the T beam vectors #A. For example, the RIS is deployed on a side of a control apparatus (for example, the first communication apparatus), and the RIS may learn, based on a measurement result fed back by each of the second communication apparatuses, of a beam vector #A corresponding to each of the second communication apparatuses. The control apparatus may be a terminal apparatus, or may be a network apparatus.

Manner 2: The RIS receives indication information #1 (that is, an example of third indication information), where the indication information #1 indicates the T beam vectors #A. Correspondingly, the control apparatus (for example, the first communication apparatus) sends the indication information #1.

For example, the indication information #1 includes indexes of the T beam vectors #A. In other words, the indication information #1 includes an index of each of the T beam vectors #A.

For another example, the indication information #1 includes an index of a part of beam vectors #A in the T beam vectors #A. For example, it is assumed that the indexes of the T beam vectors #A are consecutive. In this way, the T beam vectors #A may be determined based on the index of the part of beam vectors #A (such as an index of a 1^{st} beam vector #A, an index of a last beam vector #A, or an index of a middle beam vector #A) included in the indication information #1 and other information (such as the quantity T of beam vectors #A). T may be default, or may be carried in the indication information #1. This is not limited.

For example, the indication information #1 may be carried in at least one of the following signaling: radio resource control (radio resource control, RRC), medium access control (medium access control, MAC) (for example, a medium access control-control element (medium access control-control element, MAC CE)), or control information (for example, downlink control information (downlink control information, DCI)).

In Solution 1, the RIS may independently determine the first policy, or may determine the first policy based on an indication. The following describes two manners.

Manner 1: The RIS independently determines the first policy. For example, the RIS prestores the first policy. For another example, the first policy is predefined or preconfigured.

Manner 2: The RIS receives indication information #2 (that is, an example of fourth indication information), where the indication information #2 indicates the first policy. Correspondingly, the control apparatus (for example, the first communication apparatus) sends the indication information #2.

For example, the indication information #2 indicates the first policy, and the first policy includes the phase processing policy and the amplitude processing policy. The amplitude processing policy indicates an amplitude and/or a power of each element in the beam vector #B. In this case, the phase processing policy and the amplitude processing policy may be carried in one piece of signaling, or may be carried in different pieces of signaling. This is not limited.

For another example, the indication information #2 indicates the first policy, and the first policy includes the phase processing policy. In this case, the RIS may determine the beam vector #B based on the T beam vectors #A and the phase processing policy (for example, according to Formula 1). Further, in an example, the amplitude and the power of each element in the beam vector #B may be predefined or default. For example, the amplitude wₖ of each element in the beam vector #B is 1/sqrt(W), and the power *p*ₖ is 1/W.

For another example, the indication information #2 indicates the first policy, and the first policy includes the amplitude processing policy. In this case, the RIS may determine the beam vector #B based on the T beam vectors #A and the amplitude processing policy (for example, according to Formula 2). Alternatively, in this case, the phase processing policy is predefined, and the RIS may determine the beam vector #B based on the T beam vectors #A and the phase processing policy (for example, according to Formula 1) and in combination with the amplitude and/or the power of each element in the beam vector #B indicated by the indication information #2.

For example, the indication information #2 may be carried in at least one of the following signaling: RRC, a MAC CE, or control information (for example, DCI).

The indication information #1 and the indication information #2 may be carried in one piece of signaling, or may be carried in different pieces of signaling. This is not limited.

Solution 2: The RIS determines the beam vector #B based on the beam vector #C and the offset.

The offset may also be referred to as a second-layer beam vector, a second-level beam vector, a compensation vector, an offset vector, an adjustment vector, or the like. The offset is related to a paired second communication apparatus. Specifically, a corresponding offset when the RIS sends a signal to T1 second communication apparatuses simultaneously may be different from a corresponding offset when the RIS sends a signal to T2 second communication apparatuses simultaneously. The T1 second communication apparatuses are not completely the same as the T2 second communication apparatuses, and T1 and T2 are integers greater than 1. The offset may be a vector, a matrix, a scalar, or the like, and may specifically depend on a form of the beam vector.

In this solution, the beam vector #C is a basic vector, and the indication information #A includes the offset. For example, the beam vector #C and the offset are determined based on the T beam vectors #A and the first policy, and the RIS determines the beam vector #B based on the beam vector #C and the offset. For example, an element *ϕₘₙ* in the beam vector #B satisfies Formula 3: ${ϕ}_{mn} = {φ}_{mn}^{k} + Δ {φ}_{mn}$ Formula 3 ${φ}_{mn}^{k}$ represents an element in the beam vector #C, and Δ*φₘₙ* represents an element in the offset.

The offset includes a phase offset and/or an amplitude offset. The amplitude offset may also be referred to as an amplitude size. The following describes three examples.

Example 1: The offset includes the phase offset.

The phase offset is used to adjust a phase in the beam vector #C. For example, each element (for example, an element #1) in the phase offset corresponds to one element (for example, an element #2) in the beam vector #C, and the element #1 is a phase adjustment value of the element #2. Specifically, the RIS may determine an element in the beam vector #B based on the beam vector #C and the phase offset according to Formula 3, to obtain the beam vector #B.

Example 2: The offset includes the amplitude offset.

The amplitude offset indicates an amplitude of each element in the beam vector #C. For example, each element (for example, an element #3) in the amplitude offset corresponds to one element (for example, an element #2) in the beam vector #C, and the element #3 is an amplitude of the element #2. Specifically, the RIS may determine the beam vector #B based on the beam vector #C and the amplitude offset. In this case, values of elements in the beam vector #C and the beam vector #B are the same, and amplitudes of the elements are different.

In an example, an element in the amplitude offset is *w*ₖ, where *k* ∈ [1, 2,..., *W*]. For example, elements in the amplitude offset are the same, for example, *w*ₖ=1/sqrt(W). For another example, at least two elements in the amplitude offset are different.

Example 3: The offset includes the phase offset and the amplitude offset.

In this case, the RIS may determine the beam vector #B based on the beam vector #C, the phase offset, and the amplitude offset. For details, refer to the foregoing two examples.

In Solution 2, in an example, for the beam vector #C, the following several cases are included.

In a possible case, the beam vector #C is one of the T beam vectors #A.

In another possible case, the beam vector #C is not in the T beam vectors #A, and the beam vector #C is a beam vector determined based on the T beam vectors #A and the first policy. For example, the beam vector is one of the basic vectors, and the beam vector is relatively similar to the beam vector #B. In other words, elements in the beam vector are mostly the same as elements in the beam vector #B. For another example, the beam vector is not a basic vector.

In Solution 2, the RIS may independently determine the beam vector #C, or may determine the beam vector #C based on an indication. The following describes two manners.

Manner 1: The RIS independently determines the beam vector #C. For example, the RIS is deployed on a side of a control apparatus (for example, the first communication apparatus), and the RIS may learn, based on a measurement result fed back by each of the second communication apparatuses, of a beam vector #A corresponding to each of the second communication apparatuses, to determine the beam vector #C. For details, refer to the foregoing two cases.

Manner 2: The RIS receives indication information #3 (that is, an example of second indication information), where the indication information #3 indicates the beam vector #C. Correspondingly, the control apparatus (for example, the first communication apparatus) sends the indication information #3.

For example, the indication information #3 includes an index of the beam vector #C.

For example, the indication information #3 may be carried in at least one of the following signaling: RRC, a MAC CE, or control information (for example, DCI).

In Solution 2, the RIS may independently determine the offset, or may determine the offset based on an indication. The following describes two manners.

Manner 1: The RIS independently determines the offset. For example, the RIS is deployed on a side of a control apparatus (for example, the first communication apparatus), and the RIS may learn, based on a measurement result fed back by each of the second communication apparatuses, of a beam vector #A corresponding to each of the second communication apparatuses, to determine the offset.

Manner 2: The RIS receives indication information #4 (that is, an example of first indication information), where the indication information #4 indicates the offset. Correspondingly, the control apparatus (for example, the first communication apparatus, the terminal apparatus, or the network apparatus) sends the indication information #4.

For example, the indication information #4 indicates the offset, and the offset includes the phase offset and the amplitude offset. In this case, the phase offset and the amplitude offset may be carried in one piece of signaling, or may be carried in different pieces of signaling. This is not limited.

For another example, the indication information #4 indicates the offset, and the offset includes the phase offset. In this case, the RIS may determine the beam vector #B based on the beam vector #C and the phase offset according to Formula 3. Further, in an example, the amplitude and the power of each element in the beam vector #B may be predefined or default. For example, the amplitude *w*ₖ of each element in the beam vector #B is 1/sqrt(W), and the power *p*ₖ is 1/W.

For another example, the indication information #4 indicates the offset, and the offset includes the amplitude offset. In this case, the RIS may determine the beam vector #B based on the beam vector #C and the amplitude offset. In this case, values of elements in the beam vector #C and the beam vector #B are the same, and amplitudes of the elements are different.

For example, the indication information #4 may be carried in at least one of the following signaling: RRC, a MAC CE, or control information (for example, DCI).

The indication information #3 and the indication information #4 may be carried in one piece of signaling, or may be carried in different pieces of signaling. This is not limited.

The foregoing uses an example in which the RIS determines the beam vector #B for description. Embodiments of this application are not limited thereto. For example, another apparatus may also determine the beam vector #B. After determining the beam vector #B, the another apparatus may indicate the beam vector #B to the RIS. In this way, the RIS may send a signal to the T second communication apparatuses based on the beam vector #B.

The foregoing two solutions are examples for description, and variations of the solutions are also applicable to embodiments of this application. For example, the beam vector #B may be determined based on a part of beam vectors #A in the T beam vectors #A and the first policy. For another example, if the beam vector #B is a basic vector, an index of the beam vector #B may also be directly indicated.

Further optionally, the method 300 further includes: The RIS sends capability information of the RIS (briefly referred to as capability information). Correspondingly, the control apparatus (for example, the first communication apparatus, the terminal apparatus, or the network apparatus) receives the capability information of the RIS. It may be understood that, if the RIS is deployed on the side of the control apparatus (for example, the first communications apparatus), the RIS only needs to determine the capability information of the RIS, that is, does not need to send the capability information of the RIS to the control apparatus.

The capability information of the RIS may be used by the control apparatus to determine information related to multi-beam transmission. The information related to multi-beam transmission includes, for example, at least one of the following: a value of W, a value of T, the first policy, the basic vector, or the like.

For example, the capability information of the RIS includes at least one of the following information: angular resolution of the RIS, information about a combined beam supported by the RIS, a size of the RIS, or a quantity of beams supported by the RIS.

The angular resolution of the RIS includes angular resolution of a single beam of the RIS and/or angular resolution of a plurality of beams of the RIS (also referred to as angular resolution of a combined beam).

The size of the RIS may include, for example, a quantity of units of the RIS (that is, a quantity of units included in the RIS).

The quantity of beams supported by the RIS includes, for example, a maximum quantity of beams that can be simultaneously supported by the RIS and/or a minimum quantity of beams that can be simultaneously supported by the RIS. The maximum quantity of beams that can be simultaneously supported by the RIS is, for example, W in step 320.

The information about the combined beam supported by the RIS represents information related to the combined beam of the RIS. For example, the information about the combined beam supported by the RIS includes one or more of the following: angular resolution of the combined beam, a beam width of the combined beam (for example, a maximum beam width, a minimum beam width, or an average beam width), a beam angle of the combined beam (for example, a maximum beam angle, a minimum beam angle, or an average beam angle), and a beam radian value of the combined beam (for example, a maximum beam radian value, a minimum beam radian value, or an average beam radian value). The combined beam is, for example, a beam corresponding to the beam vector #B described above. In a possible description manner, the angular resolution of the combined beam may also include one or more of the following: a beam width of the combined beam, a beam angle of the combined beam, and a beam radian value of the combined beam. For ease of understanding, the following describes a specific procedure applicable to embodiments of this application by using an example in which the first communication apparatus is a network device and the second communication apparatus is a terminal device. It may be understood that the procedure described below is merely an example for description, and embodiments of this application are not limited thereto. For content that is not described in detail below, refer to the descriptions in the method 300. Details are not described below again.

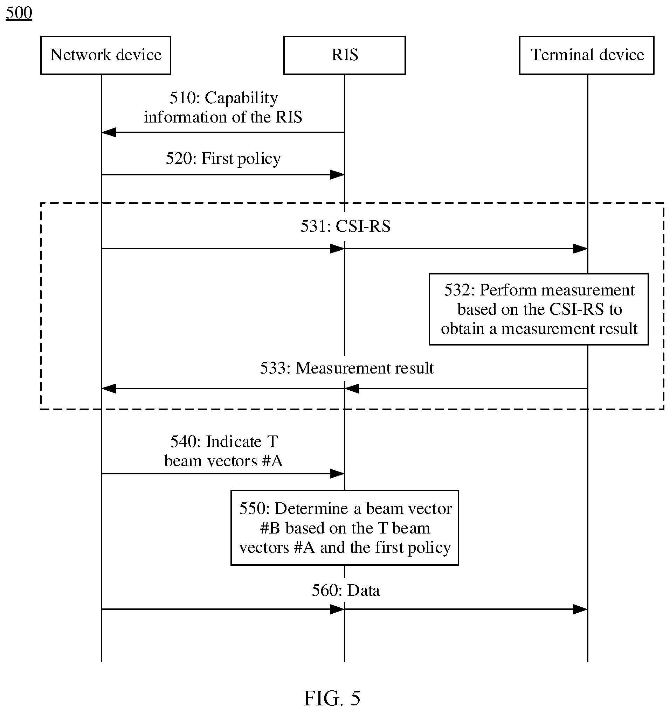

FIG. 5 is a schematic flowchart of a signal transmission method 500 applicable to an embodiment of this application. The method 500 may be used to implement Solution 1. The method 500 shown in FIG. 5 may include the following steps.

510: An RIS sends capability information of the RIS to a network device.

For the capability information of the RIS, refer to the related descriptions in the method 300. Details are not described herein again.

520: The network device sends a first policy to the RIS.

The first policy includes a phase processing policy and/or an amplitude processing policy. For the first policy, refer to the related descriptions in the method 300. Details are not described herein again.

Alternatively, the first policy may be predefined. In this case, the method 500 may not include step 520.

The network device may determine a beam vector #A of each of T terminal devices. Specifically, the network device separately performs measurement (also referred to as channel measurement, beam measurement, or RIS beam measurement) with each terminal device, to determine a beam vector #A corresponding to each terminal device. One terminal device is used as an example. For example, the measurement includes the following steps 531 to 533.

531: The network device sends a CSI-RS to the terminal device via the RIS.

Specifically, the network device sends the CSI-RS, and after receiving the RIS, the RIS sends the CSI-RS to the terminal device.

532: The terminal device performs measurement based on the CSI-RS to obtain a measurement result.

533: The terminal device sends the measurement result to the network device.

The terminal device may directly send the measurement result to the network device, or may send the measurement result to the network device via the RIS. This is not limited.

For example, if the terminal device sends the measurement result to the network device via the RIS, the RIS may record or store the measurement result.

For the measurement result, refer to the related descriptions in the method 300. Details are not described herein again.

540: The network device indicates T beam vectors #A to the RIS.

Specifically, the network device sends indication information #1 to the RIS, where the indication information #1 indicates the T beam vectors #A. For example, the indication information #1 includes indexes of the T beam vectors #A. In this way, the RIS may determine the T beam vectors #A based on the indexes of the T beam vectors #A.

For the indication information #1, refer to the related descriptions in the method 300. Details are not described herein again.

It may be understood that if the RIS is deployed on a network device side, the RIS may directly determine the T beam vectors #A.

550: The RIS determines a beam vector #B based on the T beam vectors #A and a first policy.

In a possible case, the first policy includes the phase processing policy. In this case, in step 550, the RIS may determine the beam vector #B based on the T beam vectors #A according to Formula 1. Further, in an example, an amplitude and a power of each element in the beam vector #B may be predefined, default, or indicated (for example, indicated by the network device). For example, an amplitude *w*ₖ of each element in the beam vector #B is 1/sqrt(W), and a power *p*ₖ is 1/W. For another example, amplitudes of at least two elements in the beam vector #B are different.

In another possible case, the first policy includes the amplitude processing policy. In this case, in step 550, the RIS may determine the beam vector #B based on the T beam vectors #A according to Formula 2.

In another possible case, the first policy includes the phase processing policy and the amplitude processing policy. In this case, in step 550, the RIS may determine an element in the beam vector #B based on the T beam vectors #A according to Formula 1, and determine an amplitude of each element in the beam vector #B based on the amplitude processing policy, to obtain the beam vector #B.

The foregoing is simple descriptions. For details, refer to Solution 1 in the method 300. Details are not described herein again.

560: The network device transmits data to the terminal device via the RIS.

An example in which the network device sends data to the T terminal devices via the RIS is used. For example, the network device sends data, and the RIS receives the data, and sends the data to the T terminal devices via the beam vector #B in step 550.

Network devices that send data to different terminal devices may be the same or may be different. This is not limited.

Data sent by the network device to different terminal devices may be the same or may be different. This is not limited.

Based on the foregoing technical solution, the network device may dynamically indicate, to the RIS, the T beam vectors #A corresponding to the T terminal devices. In this way, the RIS may determine, based on the T beam vectors #A and the first policy, a beam vector used when the RIS sends the data to the T terminal devices simultaneously. Therefore, a plurality of beams can be combined, thereby improving a spatial degree of freedom of an RIS-MIMO system, and a system capacity can be increased.

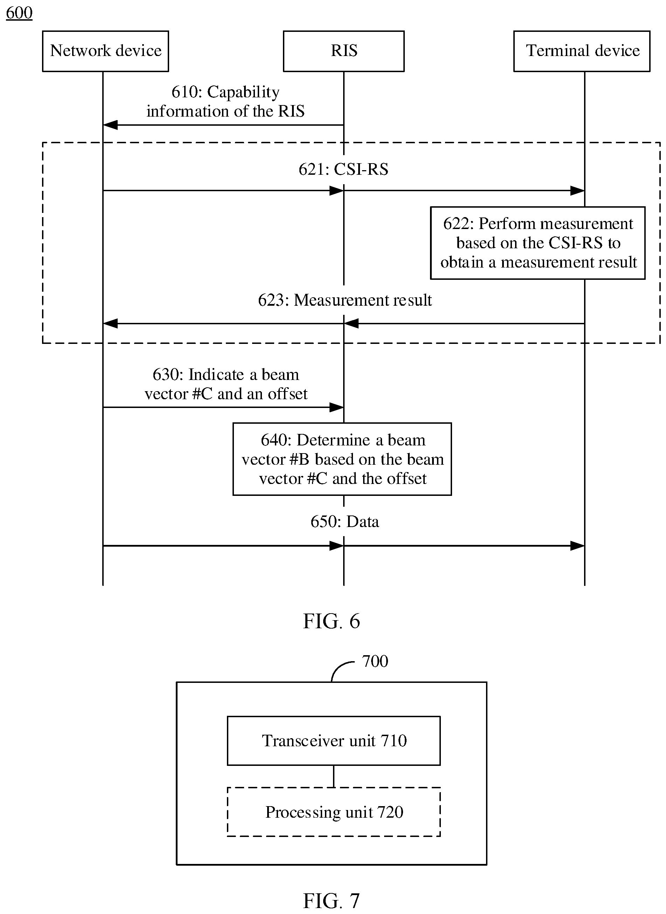

FIG. 6 is a schematic flowchart of a signal transmission method 600 applicable to an embodiment of this application. The method 600 may be used to implement Solution 2. The method 600 shown in FIG. 6 may include the following steps.

610: An RIS sends capability information of the RIS to a network device.

For the capability information of the RIS, refer to the related descriptions in the method 300. Details are not described herein again.

The network device may determine a beam vector #A of each of T terminal devices. Specifically, the network device separately performs measurement (also referred to as channel measurement, beam measurement, or RIS beam measurement) with each terminal device, to determine a beam vector #A corresponding to each terminal device. One terminal device is used as an example. For example, the measurement includes the following steps 621 to 623.

621: The network device sends a CSI-RS to the terminal device via the RIS.

622: The terminal device performs measurement based on the CSI-RS to obtain a measurement result.

623: The terminal device sends the measurement result to the network device.

For steps 621 to 623, refer to steps 531 to 533. Details are not described herein again.

630: The network device indicates a beam vector #C and an offset to the RIS.

Specifically, the network device sends indication information #3 and indication information #4 to the RIS, where the indication information #3 indicates the beam vector #C, and the indication information #4 indicates the offset. For example, the indication information #3 includes an index of the beam vector #C. In this way, the RIS may determine the beam vector #C based on the index of the beam vector #C. The indication information #3 and the indication information #4 may be carried in one piece of signaling, or may be carried in different pieces of signaling. This is not limited.

The offset includes a phase offset and/or an amplitude offset. For the offset, refer to the related descriptions in the method 300. Details are not described herein again.

640: The RIS determines a beam vector #B based on the beam vector #C and the offset.

In a possible case, the offset includes the phase offset. In this case, in step 640, the RIS may determine an element in the beam vector #B based on the beam vector #C and the phase offset according to Formula 3, to obtain the beam vector #B. Further, in an example, an amplitude and a power of each element in the beam vector #B may be predefined, default, or indicated (for example, indicated by the network device). For example, an amplitude *w*ₖ of each element in the beam vector #B is 1/sqrt(W), and a power *p*ₖ is 1/W. For another example, amplitudes of at least two elements in the beam vector #B are different.

In another possible case, the offset includes the amplitude offset. In this case, in step 640, the RIS may determine the beam vector #B based on the beam vector #C and the amplitude offset. In this case, values of elements in the beam vector #C and the beam vector #B are the same, and amplitudes of the elements are different. In an example, an element in the amplitude offset is *w*ₖ, where *k* ∈ [1, 2,..., *W*]. For example, elements in the amplitude offset are the same, for example, *w*ₖ=1/sqrt(W). For another example, at least two elements in the amplitude offset are different.

In another possible case, the offset includes the phase offset and the amplitude offset. In this case, in step 640, the RIS may determine the beam vector #B based on the beam vector #C, the phase offset, and the amplitude offset.

The foregoing is simple descriptions. For details, refer to Solution 2 in the method 300. Details are not described herein again.

650: The network device transmits data to the terminal device via the RIS.

For step 650, refer to step 560. Details are not described herein again.

Based on the foregoing technical solution, the network device may dynamically indicate, to the RIS, a reference vector (that is, the beam vector #C) and an offset for adjusting the reference vector. In this way, the RIS may determine, based on the reference vector and the offset, a beam vector used when the RIS sends data to the T terminal devices simultaneously. Therefore, a plurality of beams can be combined, thereby improving a spatial degree of freedom of an RIS-MIMO system, and a system capacity can be increased.

It may be understood that although one terminal device is used as an example for description in FIG. 5 and FIG. 6, in actual communication, the RIS may send a signal to a plurality of terminal devices simultaneously based on the beam vector #B.

It may be further understood that in the foregoing method embodiments, the method and the operation implemented by the device may alternatively be implemented by a component (such as a chip or a circuit) of the device. This is not limited.

The foregoing describes in detail the methods provided in embodiments of this application with reference to FIG. 3 to FIG. 6. The following describes in detail apparatuses provided in embodiments of this application with reference to FIG. 7 to FIG. 9. It should be understood that descriptions of apparatus embodiments correspond to descriptions of the method embodiments. Therefore, for content that is not described in detail, refer to the method embodiments. For brevity, details are not described herein.

FIG. 7 is a diagram of a communication apparatus 700 according to an embodiment of this application. The apparatus 700 includes a transceiver unit 710. The transceiver unit 710 may be configured to implement a corresponding communication function. The transceiver unit 710 may also be referred to as a communication interface or a communication unit. Optionally, the apparatus 700 further includes a processing unit 720. The processing unit 720 may be configured to perform processing, for example, determine a beam vector.

Optionally, the apparatus 700 may further include a storage unit. The storage unit may be configured to store instructions and/or data. The processing unit 720 may read the instructions and/or the data in the storage unit, so that the apparatus implements the foregoing method embodiments.

Optionally, the transceiver unit 710 may include a receiving unit and a sending unit. The receiving unit may be configured to perform a receiving-related operation (for example, an operation of receiving data or a message), and the sending unit may be configured to perform a sending-related operation (for example, an operation of sending data or a message).

In a first possible design, the apparatus 700 may be the RIS in the foregoing embodiments, and the apparatus 700 may implement steps or procedures performed by the RIS in the foregoing method embodiments. The transceiver unit 710 may be configured to perform receiving and sending-related operations (for example, an operation of sending and/or receiving data or a message) of the RIS in the foregoing method embodiments. For example, the transceiver unit 710 may be configured to perform steps 310 and 320 in the embodiment shown in FIG. 3. For another example, the transceiver unit 710 may be configured to perform receiving and sending-related operations of the RIS in the embodiment shown in FIG. 5 or FIG. 6. The processing unit 720 may be configured to perform a processing-related operation of the RIS in the foregoing method embodiments, or an operation other than receiving and sending (for example, an operation other than sending and/or receiving data or a message). For example, the processing unit 720 may be configured to perform a processing-related operation of the RIS in the embodiment shown in FIG. 3. For another example, the processing unit 720 may be configured to perform step 550 in the embodiment shown in FIG. 5. For another example, the processing unit 720 may be configured to perform step 640 in the embodiment shown in FIG. 6.

In a second possible design, the apparatus 700 may be the first communication apparatus in the foregoing embodiments, and the apparatus 700 may implement steps or procedures performed by the first communication apparatus in the foregoing method embodiments. The transceiver unit 710 may be configured to perform receiving and sending-related operations (for example, an operation of sending and/or receiving data or a message) of the first communication apparatus in the foregoing method embodiments. For example, the transceiver unit 710 may be configured to perform step 310 in the embodiment shown in FIG. 3. For another example, the transceiver unit 710 may be configured to perform receiving and sending-related operations of the network device in the embodiment shown in FIG. 5 or FIG. 6. The processing unit 720 may be configured to perform a processing-related operation of the first communication apparatus in the foregoing method embodiments, or an operation other than receiving and sending (for example, an operation other than sending and/or receiving data or a message). For example, the processing unit 720 may be configured to perform a processing-related operation of the first communication apparatus in the embodiment shown in FIG. 3. For another example, the processing unit 720 may be configured to perform a processing-related operation of the network device in the embodiment shown in FIG. 5 or FIG. 6.

In a third possible design, the apparatus 700 may be the second communication apparatus in the foregoing embodiments, and the apparatus 700 may implement corresponding steps or procedures performed by the second communication apparatus in the foregoing method embodiments. The transceiver unit 710 may be configured to perform receiving and sending-related operations (for example, an operation of sending and/or receiving data or a message) of the second communication apparatus in the foregoing method embodiments. For example, the transceiver unit 710 may be configured to perform step 320 in the embodiment shown in FIG. 3. For another example, the transceiver unit 710 may be configured to perform receiving and sending-related operations of the terminal device in the embodiment shown in FIG. 5 or FIG. 6. The processing unit 720 may be configured to perform a processing-related operation of the second communication apparatus in the foregoing method embodiments, or an operation other than receiving and sending (for example, an operation other than sending and/or receiving data or a message). For example, the processing unit 720 may be configured to perform a processing-related operation of the second communication apparatus in the embodiment shown in FIG. 3. For another example, the processing unit 720 may be configured to perform a processing-related operation of the terminal device in the embodiment shown in FIG. 5 or FIG. 6.

It should be understood that a specific process in which the units perform the foregoing corresponding steps is described in detail in the foregoing method embodiments. For brevity, details are not described herein again.

It should be understood that the apparatus 700 herein is embodied in a form of a functional unit. The term "unit" herein may be an application-specific integrated circuit (application specific-integrated circuit, ASIC), an electronic circuit, a processor (for example, a shared processor, a dedicated processor, or a group processor) configured to execute one or more software or firmware programs, a memory, a combined logic circuit, and/or another appropriate component that supports the described function. In an optional example, a person skilled in the art may understand that the apparatus 700 may be specifically the communication apparatus in the foregoing embodiments, and may be configured to perform procedures and/or steps corresponding to the communication apparatus in the foregoing method embodiments. To avoid repetition, details are not described herein again.

The apparatus 700 in the foregoing solutions has a function of implementing corresponding steps performed by the communication apparatus in the foregoing methods. The function may be implemented by hardware, or may be implemented by hardware executing corresponding software. The hardware or the software includes one or more modules corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit, may be replaced with a processor, to respectively perform receiving and sending operations and a related processing operation in the method embodiments.

In addition, the transceiver unit 710 may alternatively be a transceiver circuit (for example, may include a receiver circuit and a transmitter circuit), and the processing unit may be a processing circuit.

It should be noted that the apparatus in FIG. 7 may be the communication device in the foregoing embodiments, or may be a chip or a system on chip, for example, a system on a chip (system on a chip, SoC). The transceiver unit may be an input/output circuit or a communication interface. The processing unit is a processor, a microprocessor, or an integrated circuit integrated on the chip. This is not limited herein.

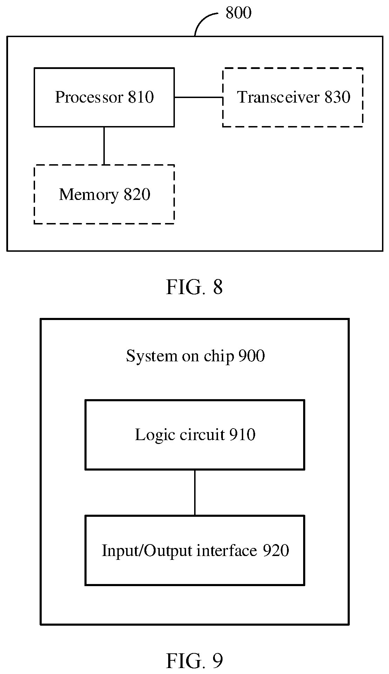

FIG. 8 is a diagram of another communication apparatus 800 according to an embodiment of this application. The apparatus 800 includes a processor 810. The processor 810 is coupled to a memory 820. The memory 820 is configured to store a computer program or instructions and/or data. The processor 810 is configured to execute the computer program or the instructions stored in the memory 820, or read the data stored in the memory 820, to perform the methods in the foregoing method embodiments.

Optionally, there are one or more processors 810.

Optionally, there are one or more memories 820.

Optionally, the memory 820 and the processor 810 are integrated together or disposed separately.

Optionally, as shown in FIG. 8, the apparatus 800 further includes a transceiver 830. The transceiver 830 is configured to receive and/or send a signal. For example, the processor 810 is configured to control the transceiver 830 to receive and/or send a signal.

For example, the processor 810 may have a function of the processing unit 720 shown in FIG. 7, the memory 820 may have a function of a storage unit, and the transceiver 830 may have a function of the transceiver unit 710 shown in FIG. 7.

In a solution, the apparatus 800 is configured to implement operations performed by the communication apparatus in the foregoing method embodiments.

For example, the processor 810 is configured to execute a computer program or instructions, for example, execute a computer program or instructions stored in the memory 820, to implement related operations of the RIS in the foregoing method embodiments.

For another example, the processor 810 is configured to execute a computer program or instructions, for example, execute a computer program or instructions stored in the memory 820, to implement related operations of the first communication apparatus or the second communication apparatus in the foregoing method embodiments.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

FIG. 9 is a diagram of a system on chip 900 according to an embodiment of this application. The system on chip 900 (which may also be referred to as a processing system) includes a logic circuit 910 and an input/output interface (input/output interface) 920.

The logic circuit 910 may be a processing circuit in the system on chip 900. The logic circuit 910 may be coupled to a storage unit, and invoke instructions in the storage unit, so that the system on chip 900 can implement the methods and functions in embodiments of this application. The input/output interface 920 may be an input/output circuit in the system on chip 900, and outputs information processed by the system on chip 900, or inputs to-be-processed data or signaling information to the system on chip 900 for processing.

Optionally, the logic circuit 910 may be implemented by one or more processors, including the one or more processors or a processing part of the one or more processors.

Optionally, the input/output interface 920 may include a transceiver circuit, a transceiver, an input/output circuit, or a communication interface.

In a solution, the system on chip 900 is configured to implement operations performed by the communication apparatus (for example, the RIS, the first communication apparatus, or the second communication apparatus) in the foregoing method embodiments.

For example, the logic circuit 910 is configured to implement a processing-related operation performed by the communication apparatus (for example, the RIS, the first communication apparatus, or the second communication apparatus) in the foregoing method embodiments. The input/output interface 920 is configured to implement a sending-related operation and/or a receiving-related operation performed by the communication apparatus (for example, the RIS, the first communication apparatus, or the second communication apparatus) in the foregoing method embodiments.

An embodiment of this application further provides a computer-readable storage medium. The computer-readable storage medium stores computer instructions used to implement the method performed by the communication apparatus (for example, the RIS, the first communication apparatus, or the second communication apparatus) in the foregoing method embodiments.

For example, when the computer program is executed by a computer, the computer may be caused to implement the method performed by the communication apparatus (for example, the RIS, the first communication apparatus, or the second communication apparatus) in the foregoing method embodiments.

An embodiment of this application further provides a computer program product, including instructions. When the instructions are executed by a computer, the method performed by the communication apparatus (for example, the RIS, the first communication apparatus, or the second communication apparatus) in the foregoing method embodiments is implemented.

An embodiment of this application further provides a communication system. The communication system includes at least one of the RIS, the first communication apparatus, and the second communication apparatus in the foregoing embodiments. For example, the system includes at least one of the RIS, the first communication apparatus, and the second communication apparatus in FIG. 2A and FIG. 2B. For another example, the system includes at least one of the RIS, the network device, and the terminal device in FIG. 5 or FIG. 6.

For explanations and beneficial effects of related content in any one of the apparatuses provided above, refer to the corresponding method embodiments provided above. Details are not described herein again.

In the several embodiments provided in this application, it should be understood that the disclosed apparatus and method may be implemented in other manners. For example, the described apparatus embodiments are merely examples. For example, division into the units is merely logical function division, and another division manner may be used during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

All or some of the foregoing embodiments may be implemented by software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium may include but is not limited to any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A signal transmission method, applied to a side of a reconfigurable intelligent surface RIS apparatus, and comprising:
receiving a signal from at least one first communication apparatus; and
sending the signal to at least two second communication apparatuses via a plurality of beams, wherein a beam vector for the plurality of beams is determined based on a beam vector for a single beam corresponding to each of the at least two second communication apparatuses.

2. The method according to claim 1, wherein that the beam vector for the plurality of beams is determined based on the beam vector for the single beam corresponding to each of the at least two second communication apparatuses comprises:
the beam vector for the plurality of beams is determined based on a first beam vector and an offset, and the offset is determined based on the beam vector for the single beam corresponding to each of the at least two second communication apparatuses.

3. The method according to claim 2, wherein the method further comprises:
receiving first indication information, wherein the first indication information indicates the offset; or
determining the offset.

4. The method according to claim 2 or 3, wherein the method further comprises:
receiving second indication information, wherein the second indication information indicates the first beam vector; or
determining the first beam vector.

5. The method according to claim 4, wherein the second indication information comprises an index of the first beam vector.

6. The method according to any one of claims 2 to 5, wherein the offset comprises a phase offset and/or an amplitude offset.

7. The method according to claim 1, wherein that the beam vector for the plurality of beams is determined based on the beam vector for the single beam corresponding to each of the at least two second communication apparatuses comprises:
the beam vector for the plurality of beams is determined based on the beam vector for the single beam corresponding to each of the second communication apparatuses and a first policy.

8. The method according to claim 7, wherein the method further comprises:
receiving third indication information, wherein the third indication information indicates the beam vector for the single beam corresponding to each of the second communication apparatuses; or
determining the beam vector for the single beam corresponding to each of the second communication apparatuses.

9. The method according to claim 8, wherein the third indication information comprises a beam vector for a single beam corresponding to at least one second communication apparatus.

10. The method according to any one of claims 7 to 9, wherein the method further comprises:
receiving fourth indication information, wherein the fourth indication information indicates the first policy; or
the first policy is predefined; or
determining the first policy.

11. The method according to any one of claims 7 to 10, wherein the first policy comprises a phase processing policy and/or an amplitude processing policy.

12. The method according to claim 6, wherein the amplitude offset is 1/sqrt(N), wherein N is a quantity of beams of the plurality of beams, and a function sqrt() is a square root function.

13. The method according to any one of claims 1 to 12, wherein before the sending the signal to the at least two second communication apparatuses via the plurality of beams, the method further comprises:
sending a reference signal to the second communication apparatus; and
receiving fifth indication information, wherein the fifth indication information indicates a beam vector for a single beam corresponding to the second communication apparatus, and the beam vector for the single beam corresponding to the second communication apparatus is obtained by performing measurement based on the reference signal.

14. The method according to any one of claims 1 to 13, wherein the method further comprises:
sending capability information of the RIS apparatus, wherein the capability information of the RIS apparatus comprises at least one of the following: a maximum quantity of beams supported by the RIS apparatus and information about a combined beam supported by the RIS apparatus.

15. The method according to any one of claims 1 to 14, wherein the sending the signal to the at least two second communication apparatuses via the plurality of beams comprises:
sending the signal to N second communication apparatuses via N beams, wherein the N beams are in one-to-one correspondence with the N second communication apparatuses, and N is an integer greater than 1.

16. A signal transmission method, comprising:
sending first indication information or third indication information, wherein the first indication information indicates an offset, the offset is determined based on a beam vector for a single beam corresponding to each of at least two second communication apparatuses, and the third indication information indicates the beam vector for the single beam corresponding to each of the second communication apparatuses.

17. The method according to claim 16, wherein the method further comprises:
sending second indication information, wherein the second indication information indicates a first beam vector.

18. The method according to claim 17, wherein the second indication information comprises an index of the first beam vector.

19. The method according to any one of claims 16 to 18, wherein the offset comprises a phase offset and/or an amplitude offset.

20. The method according to claim 19, wherein the amplitude offset is 1/sqrt(N), wherein N is a quantity of beams of the plurality of beams, and a function sqrt() is a square root function.

21. The method according to any one of claims 16 to 20, wherein the method further comprises:
sending fourth indication information, wherein the fourth indication information indicates a first policy.

22. The method according to claim 21, wherein the first policy comprises a phase processing policy and/or an amplitude processing policy.

23. The method according to any one of claims 16 to 22, wherein the method further comprises:
receiving capability information of an RIS apparatus, wherein the capability information of the RIS apparatus comprises at least one of the following: a maximum quantity of beams supported by the RIS apparatus and information about a combined beam supported by the RIS apparatus.

24. The method according to any one of claims 16 to 23, wherein the third indication information comprises a beam vector for a single beam corresponding to at least one second communication apparatus.

25. A signal transmission method, comprising:
receiving a signal from at least one first communication apparatus via a reception beam, wherein a beam vector for the reception beam is determined based on a beam vector for a single beam corresponding to each of at least two second communication apparatuses.

26. The method according to claim 25, wherein that the beam vector for the reception beam is determined based on the beam vector for the single beam corresponding to each of the at least two second communication apparatuses comprises:
the beam vector for the reception beam is determined based on a first beam vector and an offset, and the offset is determined based on the beam vector for the single beam corresponding to each of the at least two second communication apparatuses.

27. The method according to claim 26, wherein the offset comprises a phase offset and/or an amplitude offset.

28. The method according to claim 25, wherein that the beam vector for the reception beam is determined based on the beam vector for the single beam corresponding to each of the at least two second communication apparatuses comprises:
the beam vector for the reception beam is determined based on the beam vector for the single beam corresponding to each of the second communication apparatuses and a first policy.

29. The method according to claim 28, wherein the first policy comprises a phase processing policy and/or an amplitude processing policy.

30. The method according to claim 27, wherein the amplitude offset is 1/sqrt(N), wherein N is a quantity of beams of the reception beam, and a function sqrt() is a square root function.

31. The method according to any one of claims 25 to 30, wherein before the receiving the signal from the at least one first communication apparatus via the reception beam, the method further comprises:
receiving a reference signal; and
sending fifth indication information, wherein the fifth indication information indicates a beam vector for a single beam corresponding to the second communication apparatus, and the beam vector for the single beam corresponding to the second communication apparatus is obtained by performing measurement based on the reference signal.

32. A communication apparatus, comprising a module or a unit configured to perform the method according to any one of claims 1 to 31.

33. A communication apparatus, comprising a processor, wherein the processor is configured to execute a computer program or instructions, to cause the apparatus to perform the method according to any one of claims 1 to 31.

34. The apparatus according to claim 33, wherein
the apparatus further comprises a memory, and the memory is configured to store the computer program or the instructions; and/or
the apparatus further comprises a communication interface, the communication interface is coupled to the processor, and the communication interface is configured to input and/or output information.

35. A computer-readable storage medium, wherein the computer-readable storage medium stores a computer program or instructions, and when the computer program or the instructions are run on a communication apparatus, the communication apparatus is caused to perform the method according to any one of claims 1 to 31.

36. A computer program product, wherein the computer program product comprises a computer program or instructions used to perform the method according to any one of claims 1 to 31.
